# EUROPÄISCHE PATENTSCHRIFT

(11) **EP 3 680 538 B1**
(45) Veröffentlichungstag und Bekanntmachung des Hinweises auf die Patenterteilung: **02.07.2025**
(21) Anmeldenummer: 20150727.4
(22) Anmeldetag: 08.01.2020
(51) Int. Cl.: F16L 43/00

(54) **ROHRVERBINDUNG, NÄMLICH ROHRKNIE**
PIPE JOINT, IN PARTICULAR TUBULAR BEND
RACCORDEMENT DE TUYAU, À SAVOIR RACCORD COUDÉ

(30) Priorität: 08.01.2019 AT 500092019
(43) Veröffentlichungstag der Anmeldung: 15.07.2020
(73) Patentinhaber: KE KELIT GmbH, 4020 Linz (AT)
(72) Erfinder: Egger, Karl, 4020 Linz (AT)
(74) Vertreter: Hübscher & Partner Patentanwälte GmbH

(56) Entgegenhaltungen:
- WO-A1-2005/054737
- US-A1- 2014 202 577

## Beschreibung

Die Erfindung bezieht sich auf ein Rohrknie mit einem sich zwischen zwei kreisrunden Krümmungsendquerschnitten ändernden von einem Mantelkörper aufgespannten Strömungskanal und mit einem eine Hauptachse und eine Nebenachse aufweisenden elliptischen Mittenquerschnitt des Strömungskanals zwischen den beiden Krümmungsendquerschnitten des Strömungskanals, wobei der Mittenquerschnitt des Strömungskanals eine Mittenquerschnittsfläche aufweist, die im Wesentlichen dem Mittelwert der beiden Krümmungsendquerschnittsflächen des Strömungskanals entspricht, wobei das Verhältnis von der parallel zur Krümmungsachse des Rohrknies ausgerichteten Hauptachse zur Nebenachse im Bereich zwischen 1,1 und 1,5, insbesondere bei 1,3, liegt.

In der US9476531B2 wird ein Rohrknie offenbart, dessen Strömungskanalquerschnitt sich von einer kreisrunden Querschnittsfläche einer ersten Öffnung über einen elliptischen Mittenquerschnitt an der Rohrkrümmung zu einem erneuten kreisrunden Querschnitt einer zweiten Öffnung ändert, wobei die Flächen der kreisrunden Querschnitte gleich der Fläche des elliptischen Querschnitts sind. Die Ellipsenhauptachse ist dabei näherungsweise viermal größer als die Ellipsennebenachse. Durch die offenbarte elliptische Ausführung der Querschnittsfläche können Turbulenzen im Bereich der Rohrkrümmung und damit verbundene Druckverluste verhindert werden. Nachteilig daran ist allerdings die Tatsache, dass sich einerseits an der Rohrkrümmung zwangsweise große Außenabmessungen ergeben und dass das Verhältnis von Strömungskanalumfang zu Strömungskanalquerschnitt im Gegensatz zu einer kreisrunden Ausgestaltung merklich erhöht ist, wodurch die Kontaktfläche zwischen dem durchströmende Fluid und der Rohrmantelinnenseite vergrößert ist und dadurch genau Gegenteiliges bewirkt wird, nämlich eine Erhöhung des Druckverlustes infolge der vergrößerten Manteloberfläche im Bereich des elliptischen Mittenquerschnitts.

Die WO2000017562A1 zeigt Rohrverbindungen für mit Partikel beladenen Hochgeschwindigkeitsströmungen. Um Ablagerungen an den Rohrkrümmungen der Rohrverbindungen zu verhindern, weisen diese ebenfalls einen sich entlang der Strömungsrichtung verändernden Strömungskanalquerschnitt auf. Eine in der WO2000017562A1 offenbarte Ausführung stellt ein um eine Krümmungsachse gekrümmtes Rohrknie dar, deren Strömungskanalquerschnitt von einem kreisrunden Strömungskanalquerschnitt, über einen ersten unsymmetrisch elliptischen Strömungskanalquerschnitt, dessen längere Ellipsenhauptachse normal zum Krümmungsradius steht und anschließend einen erneuten kreisrunden Strömungskanalquerschnitt ausbildet. Auf Grund dieser Tatsache wird die Fluidgeschwindigkeit an der Rohrkrümmung verringert und dadurch eine Absenkung der Kollisionsenergie der Partikel und damit eine geringere Ablagerung erreicht. Da der Strömungskanal des Rohrknies nicht seitensymmetrisch ausgebildet ist, wird ein optimaler Ablagerungsschutz nur bei richtungskonformen Einbau der Rohrverbindungen erreicht.

Aus der US20140202577A1 ist ebenfalls eine Rohrverbindung mit einem sich zwischen zwei kreisrunden Krümmungsendquerschnitten ändernden von einem Mantelkörper aufgespannten Strömungskanal und mit einem eine Hauptachse und eine Nebenachse aufweisenden elliptischen Mittenquerschnitt zwischen den beiden Krümmungsendquerschnitten bekannt. Der Mittenquerschnitt weist dabei eine Mittenquerschnittsfläche auf, die im Wesentlichen dem Mittelwert der beiden Krümmungsendquerschnittsflächen entspricht. Das Verhältnis zwischen Hauptachse und Nebenachse liegt bei etwa 2. Dadurch ergibt sich einerseits eine große Außenabmessung in diesem Bereich und andererseits ein Strömungskanalumfang-zu-Strömungskanalquerschnitt-Verhältnis, das eine große Kontaktfläche zwischen dem durchströmenden Fluid und der Rohrmantelinnenseite bedingt, wodurch es wiederum zu einer Erhöhung des Druckverlustes kommt.

Der Erfindung liegt somit die Aufgabe zugrunde, eine Rohrverbindung vorzuschlagen, die unabhängig von der Einbaurichtung einen minimalen Widerstandsbeiwert aufweist, ohne die Außenabmessungen der Rohrverbindung gegenüber Standardrohrverbindungen merklich zu erhöhen.

Die Erfindung löst die gestellte Aufgabe dadurch, dass zur Ausbildung einer kreisrunden Außenabmessung des Mantelkörpers der Mittenquerschnittsfläche die Dicke des Mantelkörpers in Verlängerung der Hauptachse kleiner als die Dicke in Verlängerung der Nebenachse ist, wobei sich der elliptische Mittenquerschnitt des Strömungskanals exakt auf halbem Wege des von dem Mantelkörper aufgespannten Strömungskanals befindet, sodass sich die an den Mittenquerschnitt des Strömungskanals angrenzenden Rohrverbindungsabschnitte wie Bild und Spiegelbild verhalten, wobei der Mittelpunkt der Mittenquerschnittsfläche des Strömungskanals im Zentrum der kreisrunden Außenabmessung des Mantelkörpers der Mittenquerschnittsfläche liegt, und wobei der Mantelkörper der Krümmungsendquerschnitte eine kreisrunde Außenabmessung aufweist.

Der elliptische Mittenquerschnitt befindet sich exakt auf halbem Wege des von dem Mantelkörper der Rohrverbindung aufgespannten Strömungskanals, sodass sich die daran angrenzenden Rohrverbindungsabschnitte wie Bild und Spiegelbild verhalten. Die Mittenquerschnittsfläche bildet dabei eine Ellipse aus, wobei es sich überraschenderweise herausgestellt hat, dass sich besonders geringe Druckverluste ergeben, wenn die längere Ellipsenhauptachse parallel zur Rohrkrümmungsachse steht. Um homogene Strömungsgeschwindigkeiten über die gesamte Rohrverbindung zu begünstigen, entspricht die Mittenquerschnittsfläche im Wesentlichen den Krümmungsendquerschnittsflächen. Im Wesentlichen bedeutet hier, dass die Fläche auf Grund von Fertigungsfehlern oder dergleichen um 5 % abweichen kann. Um auch Rohrstücke verschiedener Durchmesser miteinander verbinden zu können, sind die Krümmungsendquerschnittsflächen nicht darauf beschränkt, den gleichen Durchmesser zu haben. In diesem Fall bildet die Mittenquerschnittsfläche den Mittelwert der Krümmungsendquerschnittsflächen.

Unabhängig davon weist der Mittenquerschnitt eine elliptische Mittenquerschnittsfläche auf, wobei es sich überraschendweise als besonders günstig herausgestellt hat, wenn das Verhältnis von Hauptachse zu Nebenachse im Bereich zwischen 1,1 und 1,5, insbesondere bei 1,3, liegt. Auf Grund dieses Verhältnisses geht die Außenabmessung der Rohrverbindung nicht wesentlich über das Maß der kreisrunden Krümmungsendquerschnitte hinaus, wodurch beispielsweise standardisierte Isolierungen eingesetzt und bestehende Montagekanäle verwendet werden können.

Um einen möglichst druckverlustfreien Übergang zwischen der erfindungsgemäßen Rohrverbindung und daran anschließenden Rohren zu ermöglichen, wird vorgeschlagen, dass an die Krümmungsendquerschnitte Übergangsstücke anschließen, deren kreisrunder Strömungsquerschnitt sich von den Krümmungsendquerschnittsflächen weg stetig erweitert, wobei die den Strömungskanal umfänglich begrenzenden Mantelflächen im Bereich der Stoßflächen von Mantelkörper und Übergangsstück in Kanallängsrichtung geometrisch stetig ineinander übergehen. Dies hat zur Folge, dass die die Mantelfläche des Strömungskanals oder der Stromröhre bildenden Stromlinien des Übergangsstückes und des Mantelkörpers an ihrem Stoßpunkt dieselbe Tangentensteigung aufweisen, wodurch eine Ablösung der Grenzschichten verhindert werden kann.

Damit auch Rohre mit besonders großem Durchmesser auf kurzem Wege druckverlustfrei miteinander verbunden werden können, empfiehlt es sich, dass an die Übergansstückenden Endstücke anschließen, deren kreisrunder Strömungsquerschnitt sich von den Übergansstückenden weg stetig erweitert, wobei die den Strömungskanal umfänglich begrenzenden Mantelflächen im Bereich der Stoßflächen von Übergangsstück und Endstück in Kanallängsrichtung geometrisch stetig ineinander übergehen. Besonders einfache konstruktive Verhältnisse ergeben sich dabei, wenn sich der Strömungsquerschnitt streng monoton stetig erweitert. Um die Rohrverbindung möglichst kompakt auszuführen, kann die Strömungsquerschnittszunahme in Richtung der Rohrachse je Längenmaßeinheit im Endstück größer sein als im Übergangsstück.

In der Zeichnung ist der Erfindungsgegenstand beispielsweise dargestellt. Es zeigen
- Fig. 1: einen Schnitt durch eine Ausführungsform der erfindungsgemäßen Rohrverbindung,
- Fig. 2: eine der Ansicht II entsprechenden Detailansicht der Fig. 1,
- Fig. 3: einen Schnitt entlang der Linien III-III der Fig. 1,
- Fig. 4: einen Schnitt entlang der Linien IV-IV der Fig. 1 und
- Fig. 5: einen Schnitt entlang der Linien V-V der Fig. 1.

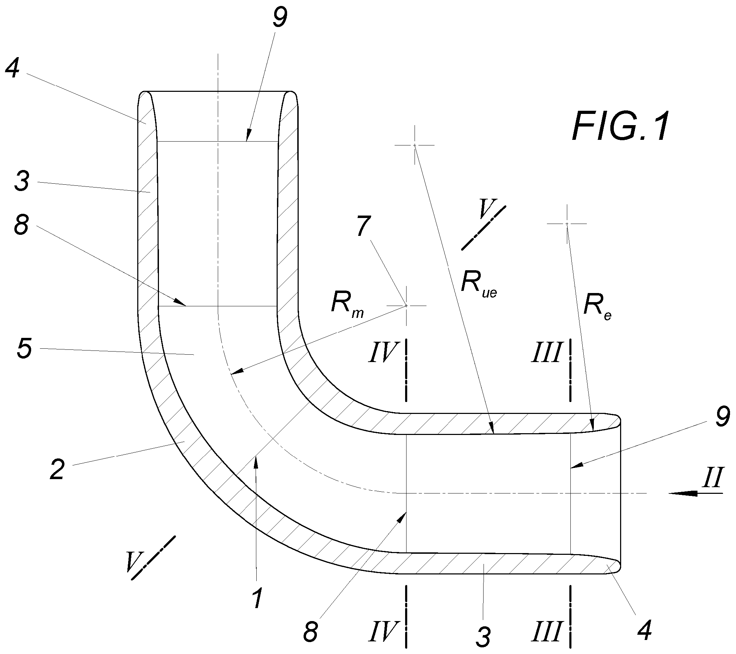

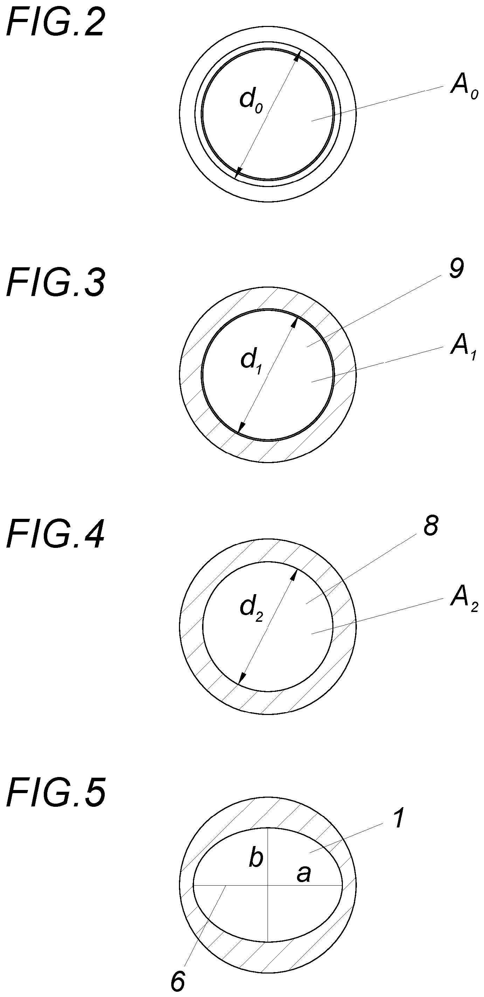

Eine Ausführungsform der erfindungsgemäßen Rohrverbindung, ein Rohrknie, weist, wie in der Fig.1 abgebildet, einen bezüglich einer Mittenquerschnittsfläche 1 symmetrischen Mantelkörper 2 auf, an den endabschnittseitig zwei symmetrische Übergangsstücke 3 anschließen, die wiederum geometrisch stetig in Endstücke 4 übergehen und so einen Strömungskanal 5 für ein Fluid aufspannen. Der Mittenquerschnitt weist, wie in der Fig. 5 zu sehen, eine elliptische Mittenquerschnittsfläche auf, wodurch sich besonders günstige Eigenschaften hinsichtlich der Strömungsbedingungen ergeben und Druckverluste verringert werden. Die elliptische Mittenquerschnittsfläche 1 ist so im Strömungskanal 5 angeordnet, dass die längere Ellipsenhauptachse 6 parallel zur senkrecht auf die Zeichenebene stehenden Krümmungsachse 7 ausgerichtet ist. Der Mantelkörper 2 weist an seinem Übergang zu den Übergangsstücken 3 kreisrunde Krümmungsendquerschnitte 8 auf, deren Flächen im Wesentlichen die gleiche Größe wie die Mittenquerschnittsfläche 1 aufweisen. Der Strömungskanalquerschnitt der Übergangsstücke 3 erweitert sich zu den Endstücken 4 hin. Die sich stetig erweiternde Strömungskanäle der Verbindungsstücke 3 sind dabei von Stromlinien begrenzt, die einem Kreisbahnabschnitt mit dem Radius Rᵤₑ entsprechen, wobei die Stromlinien des Strömungskanals der Verbindungsstücke 3 geometrisch stetig in die Stromlinien des Strömungskanals des Mantelkörpers 2 übergehen und daher an ihrem Berührungspunkt dieselbe Tangentensteigung aufweisen. Der Mittelpunkt des Kreises mit dem Radius Rᵤₑ liegt in einer von den Krümmungsendquerschnitt 8 aufgespannten Ebene. Gemäß der Ausführung nach Fig. 1 können an die Übergangsstücke 3 Endstücke 4 anschließen, deren kreisrunder Strömungsquerschnitt 9 sich von den Übergansstückenden weg stetig erweitert, wobei die Stromlinien des Strömungskanals der Endstücke 4 ebenfalls geometrisch stetig in die Stromlinien des Strömungskanals der Verbindungsstücke 3 übergehen. Die Stromlinien des Strömungskanals der Endstücke 4 entsprechen einem Kreisbahnabschnitt mit dem Radius Rₑ, der kleiner als der Radius Rᵤₑ ist, wodurch sich eine größere Strömungsquerschnittszunahme in Richtung der Rohrachse je Längenmaßeinheit ergibt. Der Mittelpunkt des Kreises mit dem Radius Rₑ liegt in einer von den Strömungsquerschnitt 9 aufgespannten Ebene. Die Endstücke bilden vorzugsweise Muffen, dienen der Aufnahme von Rohren und sollen für einen sauberen verwirbelungsfreien Übergang zwischen Rohr und dem jeweiligen Rohrverbindungsstück, hier Rohrknie, sorgen.

Anwendungsbeispiel: Stellvertretend werden im Folgenden Ausführungsbeispiele für eine erfindungsgemäße Rohrverbindung, hier Rohrknie RK1 und RK2, zum Verbinden von Rohren mit einem Rohrdurchmesser von 20mm genannt, wobei die hier gelisteten Referenzzeichen den Referenzzeichen der Fig. 1 entsprechen. Die Erfindung ist nicht auf dieses Ausführungsbeispiel limitiert, sondern umfasst auch Rohrknie anderer Rohrdurchmesser, wie beispielsweise 16, 25 und 32mm. Alle angeführten Dimensionen sind in mm bzw. in mm² angegeben.

| Variante | d₀ | A₀ | d₁ | A₁ | Rₑ | d₂ | A₂ | Rᵤₑ | a | b | A₃ | Rₘ |
|---|---|---|---|---|---|---|---|---|---|---|---|---|
| RK 1 | 12,348 | 119,752 | 10,827 | 92,067 | 26 | 9,7 | 73,898 | 445,795 | 11,1 | 8,5 | 74,102 | 17,02 |
| RK2 | 12,72 | 127,076 | 11,62 | 106,048 | 20 | 11,36 | 101,355 | 943,6 | 13 | 10 | 102,1 | 17,983 |

## Patentansprüche

1. Rohrknie mit einem sich zwischen zwei kreisrunden Krümmungsendquerschnitten (8) ändernden von einem Mantelkörper (2) aufgespannten Strömungskanal (5) und mit einem eine Hauptachse (a) und eine Nebenachse (b) aufweisenden elliptischen Mittenquerschnitt des Strömungskanals (5) zwischen den beiden Krümmungsendquerschnitten (8) des Strömungskanals (8), wobei der Mittenquerschnitt des Strömungskanals (5) eine Mittenquerschnittsfläche (1) aufweist, die im Wesentlichen dem Mittelwert der beiden Krümmungsendquerschnittsflächen des Strömungskanals (5) entspricht, wobei das Verhältnis von der parallel zur Krümmungsachse (7) des Rohrknies ausgerichteten Hauptachse (a) zur Nebenachse (b) im Bereich zwischen 1,1 und 1,5, insbesondere bei 1,3, liegt, **dadurch gekennzeichnet, dass** zur Ausbildung einer kreisrunden Außenabmessung des Mantelkörpers (2) der Mittenquerschnittsfläche (1) die Dicke des Mantelkörpers in Verlängerung der Hauptachse (a) kleiner als die Dicke in Verlängerung der Nebenachse (b) ist, wobei sich der elliptische Mittenquerschnitt des Strömungskanals (5) exakt auf halbem Wege des von dem Mantelkörper (2) aufgespannten Strömungskanals (5) befindet, sodass sich die an den Mittenquerschnitt des Strömungskanals (5) angrenzenden Rohrverbindungsabschnitte wie Bild und Spiegelbild verhalten, wobei der Mittelpunkt der Mittenquerschnittsfläche (1) des Strömungskanals (5) im Zentrum der kreisrunden Außenabmessung des Mantelkörpers (2) der Mittenquerschnittsfläche (1) liegt, und wobei der Mantelkörper (2) der Krümmungsendquerschnitte (8) eine kreisrunde Außenabmessung aufweist

2. Rohrknie nach Anspruch 1, **dadurch gekennzeichnet, dass** an die Krümmungsendquerschnitte (8) Übergangsstücke (3) anschließen, deren kreisrunder Strömungsquerschnitt (9) sich von den Krümmungsendquerschnittsflächen weg stetig erweitert, wobei die den Strömungskanal (5) umfänglich begrenzenden Mantelflächen im Bereich der Stoßflächen von Mantelkörper (2) und Übergangsstück (3) in Kanallängsrichtung geometrisch stetig ineinander übergehen.

3. Rohrknie nach Anspruch 2, **dadurch gekennzeichnet, dass** an die Übergansstückenden Endstücke (4) anschließen, deren kreisrunder Strömungsquerschnitt (9) sich von den Übergansstückenden weg stetig erweitert, wobei die den Strömungskanal (5) umfänglich begrenzenden Mantelflächen im Bereich der Stoßflächen von Übergangsstück (3) und Endstück (4) in Kanallängsrichtung geometrisch stetig ineinander übergehen.

4. Rohrknie nach Anspruch 2 oder 3, **dadurch gekennzeichnet, dass** sich der Strömungsquerschnitt (9) streng monoton stetig erweitert.

5. Rohrknie nach Anspruch 3 oder 4, **dadurch gekennzeichnet, dass** die Strömungsquerschnittszunahme in Richtung der Rohrachse je Längenmaßeinheit im Endstück (4) größer ist als im Übergangsstück (3).

## Claims

1. Pipe elbow with a flow channel (5) which changes between two circular curvature end cross-sections (8) and is spanned by a jacket body (2), and with an elliptical central cross-section of the flow channel (5) between the two curvature end cross-sections (8) of the flow channel (8), which central cross-section has a main axis (a) and a secondary axis (b), the central cross-section of the flow channel (5) having a central cross-sectional area (1) which essentially corresponds to the mean value of the two curvature end cross-sectional areas of the flow channel (5), the ratio of the main axis (a), which is aligned parallel to the axis of curvature (7) of the pipe elbow, to the secondary axis (b) being in the range between 1.1 and 1.5, in particular 1.3, **characterized in that in that**, in order to form a circular outer dimension of the jacket body (2) of the central cross-sectional area (1), the thickness of the jacket body in the extension of the main axis (a) is smaller than the thickness in the extension of the secondary axis (b), wherein the elliptical central cross-section of the flow channel (5) is located exactly halfway along the flow channel (5) spanned by the jacket body (2), so that the pipe connection sections adjacent to the central cross-section of the flow channel (5) behave like an image and mirror image, wherein the center of the central cross-sectional area (1) of the flow channel (5) lies in the center of the circular outer dimension of the jacket body (2) of the central cross-sectional area (1), and wherein the jacket body (2) of the curvature end cross-sections (8) has a circular outer dimension

2. Pipe elbow according to claim 1, **characterized in that** the curvature end cross-sections (8) are adjoined by transition pieces (3) whose circular flow cross-section (9) widens continuously away from the curvature end cross-section surfaces, the circumferential surfaces bounding the flow channel (5) merging geometrically continuously into one another in the longitudinal direction of the channel in the region of the joint surfaces of the jacket body (2) and transition piece (3).

3. Pipe elbow according to claim 2, **characterized in that** the transition piece ends are adjoined by end pieces (4) whose circular flow cross-section (9) widens continuously away from the transition piece ends, the circumferential surfaces bounding the flow channel (5) merging geometrically continuously into one another in the longitudinal direction of the channel in the region of the joint surfaces of the transition piece (3) and end piece (4).

4. Pipe elbow according to claim 2 or 3, **characterized in that** the flow cross-section (9) expands strictly monotonically and continuously.

5. Pipe elbow according to claim 3 or 4, **characterized in that** the increase in flow cross-section in the direction of the pipe axis per unit length is greater in the end piece (4) than in the transition piece (3).

## Revendications

1. Coude tubulaire avec un canal d'écoulement (5) s'étendant entre deux sections transversales d'extrémité de courbure (8) circulaires évoluant à partir d'un corps enveloppant (2), et avec une section transversale centrale elliptique du canal d'écoulement (5) présentant un axe principal (a) et un axe secondaire (b) entre les deux sections transversales d'extrémité de courbure (8) du canal d'écoulement (8), la section transversale centrale du canal d'écoulement (5) présentant une surface de section transversale centrale (1) qui correspond sensiblement à la valeur moyenne des deux surfaces de section transversale d'extrémité de courbure du canal d'écoulement (5), dans lequel le rapport entre l'axe principal (a) parallèle à l'axe de courbure (7) du coude et l'axe secondaire (b) est compris entre 1,1 et 1,5, en particulier égal à 1,3, **caractérisé en ce que** pour obtenir une dimension extérieure circulaire du corps enveloppant (2) de la surface transversale centrale (1), l'épaisseur du corps enveloppant dans le prolongement de l'axe principal (a) est inférieure à l'épaisseur dans le prolongement de l'axe secondaire (b), la section transversale centrale elliptique du canal d'écoulement (5) se trouvant exactement à mi-chemin du canal d'écoulement (5) formé par le corps enveloppant (2), de sorte que les sections de raccordement de tuyaux adjacentes à la section transversale centrale du canal d'écoulement (5) se comportent comme une image et une image miroir, le centre de la surface de section transversale médiane (1) du canal d'écoulement (5) se trouvant au centre de la dimension extérieure circulaire du corps enveloppant (2) de la surface de section transversale médiane (1), et le corps enveloppant (2) des sections transversales d'extrémité courbées (8) présentant une dimension extérieure circulaire.

2. Coude de tuyau selon la revendication 1, **caractérisé en ce que** des pièces de transition (3) se raccordent aux sections transversales d'extrémité de courbure (8), dont la section transversale circulaire (9) d'écoulement s'élargit progressivement à partir des surfaces de section transversale d'extrémité de courbure, les surfaces enveloppant délimitant le canal d'écoulement (5) sur la circonférence se raccordant géométriquement de manière continue dans le sens longitudinal du canal au niveau des surfaces de jonction du corps enveloppant (2) et de la pièce de transition (3).

3. Coude de tuyau selon la revendication 2, **caractérisé en ce que** les extrémités des pièces de transition sont reliées à des pièces d'extrémité (4) dont la section transversale d'écoulement circulaire (9) s'élargit progressivement à partir des extrémités des pièces de transition, les surfaces enveloppant délimitant le canal d'écoulement (5) sur la circonférence se fondant géométriquement de manière continue dans le sens longitudinal du canal au niveau des surfaces de jonction de la pièce de transition (3) et de la pièce d'extrémité (4).

4. Coude de tuyau selon la revendication 2 ou 3, **caractérisé en ce que** la section transversale d'écoulement (9) s'élargit de manière strictement monotone et continue.

5. Coude de tuyau selon la revendication 3 ou 4, **caractérisé en ce que** l'augmentation de la section transversale d'écoulement dans le sens de l'axe du tuyau par unité de longueur est plus importante dans l'élément d'extrémité (4) que dans l'élément de transition (3).
